# EUROPEAN PATENT APPLICATION

(11) **EP 4 354 054 A1**
(43) Date of publication of application: **17.04.2024**
(21) Application number: 22819078.1
(22) Date of filing: 18.01.2022
(51) Int. Cl.: F25D 11/00, F25D 25/02, F25D 23/00, F25D 17/08, F25D 29/00, A23L 13/10, A23L 13/70, A23B 4/06

(54) **AGING COMPARTMENT FOR REFRIGERATOR, AND REFRIGERATOR HAVING SAME**

(30) Priority: 07.06.2021 CN 202110632635
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: YI, Yao, Qingdao, Shandong 266101 (CN); LIU, Haoquan, Qingdao, Shandong 266101 (CN); CHEN, Tong, Qingdao, Shandong 266101 (CN)
(74) Representative: Winter, Brandl - Partnerschaft mbB
(86) International application number: PCT/CN2022/072547
(87) International publication number: WO 2022/257470

(57) **Abstract**

The present invention relates to the field of refrigeration apparatus technologies, and in particular, to a ripening compartment for a refrigerator and a refrigerator having the same. The ripening compartment for a refrigerator includes: a drawer provided in a cabinet of the refrigerator in a drawable mode, an upper end of the drawer being open to form a top opening for taking and placing foods, and a rear wall plate of the drawer being provided with an air outlet and an air return port; an upper cover plate provided above the drawer, and configured to close the top opening of the drawer and define a ripening space together with the drawer when the drawer is completely pushed into the cabinet; and an air flow circulation assembly provided on a rear side of the rear wall plate of the drawer and configured to prompt air flow to enter the ripening space through the air outlet and be blown out from the air return port. In the ripening compartment according to the present invention, the air flow circulation assembly is provided on the rear side of the rear wall plate of the drawer, such that stability of circulation of air flow in the ripening space is guaranteed, thereby improving a dry ripening effect.

## Description

### TECHNICAL FIELD

The present invention relates to the field of refrigeration apparatus technologies, and in particular, to a ripening compartment for a refrigerator and a refrigerator having the same.

### BACKGROUND

With an increasing living standard of consumers, a demand for aged foods is gradually increased. Generally, ripening methods include wet ripening and dry ripening, the dry-aged food has a softer mouthfeel and a richer, more saturated and more variable flavor than the wet-aged food, and therefore, the dry-aged food gradually becomes a preferred choice of the consumers. However, dry ripening requires a long-time whole-course monitoring operation including strict condition control, such as control over a temperature, a humidity, an air speed, and a time, or the like.

For an existing ripening apparatus, the air speed of air flow in a ripening space is controlled by providing a ventilation device. However, a flow field in the ripening space of the existing ripening apparatus is relatively disordered, such that a circulation efficiency is low, resulting in a poor ripening effect, or the like.

### SUMMARY

In view of the above problems, there are proposed a ripening compartment for a refrigerator and a refrigerator having the same.

An object of the present invention is to provide a ripening compartment for a refrigerator, which improves stability of air flow circulation in a ripening space and improves a dry ripening effect.

A further object of the present invention is to improve an efficiency of the air flow circulation inside the ripening space and further improve the dry ripening effect.

In order to achieve the above-mentioned object, the present invention provides A ripening compartment for a refrigerator, comprising:
a drawer provided in a cabinet of the refrigerator in a drawable mode, an upper end of the drawer being open to form a top opening for taking and placing foods, and a rear wall plate of the drawer being provided with an air outlet and an air return port;
an upper cover plate provided above the drawer, and configured to close the top opening of the drawer and define a ripening space together with the drawer when the drawer is completely pushed into the cabinet; and
an air flow circulation assembly provided on a rear side of the rear wall plate of the drawer and configured to prompt air flow to enter the ripening space through the air outlet and then be blown out from the air return port.

Further, wherein the air flow circulation assembly comprises:
a fan frame provided on a rear side of the air outlet; and
a fan provided in the fan frame and configured to prompt the air flow in the ripening space to be blown out from the air return port and then fed back to the ripening space from the air outlet.

Further, wherein the air return port is provided above the air outlet; and
the air flow circulation assembly further comprises:
an air return cover extending forwards and upwards from a top of the fan frame to the air return port and configured to guide the air flow blown out from the air return port into the fan frame.

Further, wherein the fan is configured as an axial flow fan;
an air guide portion is provided at the air outlet, and the air guide portion is configured to obliquely downwards feed the air flow blown out by the axial flow fan into the ripening space.

Further, wherein a first vent communicated with a storage compartment of the refrigerator is formed in a side wall of the fan frame, so as to allow air flow in the storage compartment to be sucked into the fan frame from the first vent and enter the ripening space from the air outlet under an action of the fan;
front regions of side wall plates on both lateral sides of the drawer are provided with second vents communicated with the storage compartment, so as to allow the air flow in the ripening space to flow into the storage compartment from the second vents under the action of the fan.

Further, the ripening compartment for a refrigerator comprising:
a humidity sensor for detecting a humidity within the ripening space;
wherein a vent opening and closing device is provided at the first air vent;
the vent opening and closing device is configured to adjust an air flow area of the first vent according to the humidity, thereby changing a rate of air exchange between the ripening space and the storage compartment.

Further, wherein the air outlet is located in a middle of the rear wall plate of the drawer;
a geometric center of the second vent is positioned higher than a geometric center of the air outlet.

Further, the ripening compartment for a refrigerator comprising:
a rack detachably provided in the drawer and configured to bear the foods, such that the air flow circulating in the ripening space flows in up-down directions and left-right directions of the foods; and
a tray detachably provided below the rack and configured to collect juice dripping from the foods borne on the rack in a ripening process;
wherein the rack comprises a bearing surface and a support, the bearing surface has a net structure, an area of the bearing surface is 0.8-0.99 times an area of a bottom of the drawer, the support is configured to support the bearing surface on the tray, and a height of the support is 1cm to 3cm.

Further, wherein the upper cover plate comprises a top wall and a skirt formed by downward folding, the skirt comprises a first skirt side wall and a second skirt side wall on two sides of the top wall and a skirt rear wall on a rear side of the top wall, each of the first skirt side wall and the second skirt side wall is in a wedge shape with a narrow front and a wide rear, and the skirt rear wall protrudes backwards to form a refrigerating air supply port for conveying cooling air flow at a specified temperature into the ripening space;
a first side wall plate and a second side wall plate on the two lateral sides of the drawer are correspondingly configured into high-front and low-rear structures matched with the first skirt side wall and the second skirt side wall, such that when the drawer is completely pushed into the cabinet, a bottom surface of the skirt abuts against top surfaces of the first side wall plate, the second side wall plate and the rear wall plate.

In addition, the present invention provides a refrigerator, comprising:
a cabinet having a refrigerating air duct for providing cooling air flow defined therein; and
the ripening compartment for a refrigerator according to any one of claims 1 to 9 provided within the cabinet;
wherein the refrigerating air duct is provided with at least one air supply port for conveying the cooling air flow to the outside of the refrigerating air duct, and at least a part of the at least one air supply port is communicated with a refrigerating air supply port of the ripening compartment.

The ripening compartment for a refrigerator according to the present invention includes the drawer provided in the cabinet of the refrigerator in the drawable mode and the upper cover plate for closing the top opening of the drawer, and when the drawer is completely pushed into the cabinet, the upper cover plate and the drawer define the independent ripening space. Since the rear wall plate of the drawer is provided with the air outlet and the air return port, and the rear side of the rear wall plate of the drawer is provided with the air flow circulation assembly, the air flow is guaranteed to enter the ripening space through the air outlet and then to be blown out from the air return port, and stability of circulation in the ripening space is improved, thereby improving a dry ripening effect.

Further, the air flow circulation assembly in the present invention includes the fan frame provided on the rear side of the air outlet and the air return cover extending forwards and upwards from the top of the fan frame to the air return port, and a flow direction of the air flow blown out from the air return port is defined. Since the fan is provided in the fan frame, under a promoting action of the fan, the air flow blown out from the air return port quickly enters the fan frame through the air return cover, and the efficiency of air flow circulation is improved, thereby further improving the dry ripening effect.

The above and other objects, advantages and features of the present invention will become more apparent to those skilled in the art from the following detailed description of specific embodiments thereof taken in conjunction with the accompanying drawings.

### BRIEF DESCRIPTION OF THE DRAWINGS

Some specific embodiments of the invention will be described in detail hereinafter by way of example and not by way of limitation with reference to the accompanying drawings. The same reference numerals identify the same or similar components or parts in the drawings. Those skilled in the art should appreciate that the drawings are not necessarily drawn to scale. In the drawings:
FIG. 1 is a schematic structural diagram of a ripening compartment for a refrigerator according to an embodiment of the present invention;
FIG. 2 is a schematic exploded structural diagram of the ripening compartment for a refrigerator according to the embodiment of the present invention;
FIG. 3 is a top view of the ripening compartment for a refrigerator according to the embodiment of the present invention with an upper cover plate removed;
FIG. 4 is a sectional view of the ripening compartment for a refrigerator according to the embodiment of the present invention taken along section line A-A' in FIG. 1; and
FIG. 5 is a schematic structural diagram of a refrigerator according to an embodiment of the present invention.

### DETAILED DESCRIPTION

Exemplary embodiments of the present disclosure will be described in more detail with reference to the accompanying figures hereinafter. Although exemplary embodiments of the disclosure are illustrated in the accompanying figures, it should be understood that the disclosure may be embodied in many different forms and should not be construed as being limited to the embodiments set forth herein. Rather, these embodiments are provided so that this disclosure can be thoroughly understood and will fully convey the scope of the disclosure to those skilled in the art.

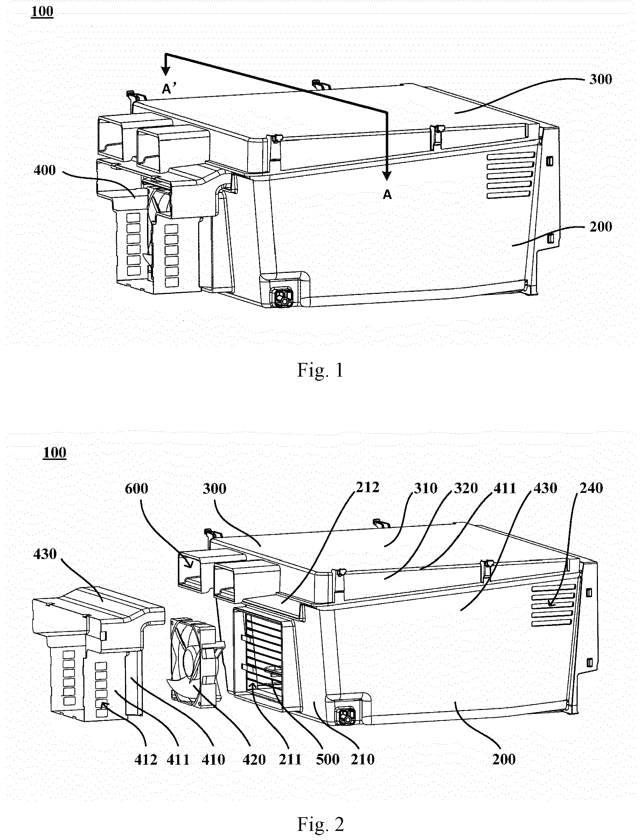

FIG. 1 is a schematic structural diagram of a ripening compartment for a refrigerator according to an embodiment of the present invention; FIG. 2 is a schematic exploded structural diagram of the ripening compartment for a refrigerator according to the embodiment of the present invention. The ripening compartment 100 for a refrigerator according to the present invention may generally include a drawer 200, an upper cover plate 300 and an air flow circulation assembly 400.

In the present embodiment, the drawer 200 is provided in a cabinet of the refrigerator in a drawable mode, an upper end of the drawer is open to form a top opening for taking and placing foods, and a rear wall plate 210 of the drawer 200 is provided with an air outlet 211 and an air return port 212. The upper cover plate 300 is provided above the drawer 200, and configured to close the top opening of the drawer 200 and define a ripening space together with the drawer 200 when the drawer 200 is completely pushed into the cabinet. The air flow circulation assembly 400 is provided on a rear side of the rear wall plate 210 of the drawer 200 and configured to prompt air flow to enter the ripening space through the air outlet 211 and then be blown out from the air return port 212, so as to complete air flow circulation in the ripening space.

In the ripening compartment 100 according to the present invention, the drawer 200 and the upper cover plate 300 are fitted with each other to define the independent ripening space. The rear wall plate 210 of the drawer 200 is provided with the air outlet 211 and the air return port 212, and the rear side of the rear wall plate 210 of the drawer 200 is provided with the air flow circulation assembly 400. The air flow circulation assembly 400 realizes air flow circulation in the ripening space to provide a ripening environment in which dry ripening of foods can be realized, and dry-aged foods can be made at home. The air flow circulation assembly 400 is provided on the rear side of the drawer 200, does not affect an internal structure of the drawer 200, is not limited by movement of the drawer 200, and is more consistent with use habits of a user.

In some embodiments, as shown in FIG. 2, the air flow circulation assembly 400 includes a fan frame 410 and a fan 420.

In the present embodiment, the fan frame 410 is provided on a rear side of the air outlet 211, and the fan 420 is provided in the fan frame 410 and configured to prompt the air flow in the ripening space to be blown out from the air return port 212 and then fed back to the ripening space from the air outlet 211. Specifically, the air outlet 211 has a square shape and is formed by protruding rearwards from the rear wall plate 210 of the drawer 200. The fan frame 410 is attached to the rear side of the air outlet 211, such that air flow in the fan frame 410 is fed back to the ripening space from the air outlet 211 under an action of the fan 420.

The air flow circulation assembly 400 in the present embodiment includes the fan frame 410 provided on the rear side of the air outlet 211 and the fan 420 provided in the fan frame 410, such that the air flow in the fan frame 410 is effectively and stably fed back to the ripening space from the air outlet 211, and an air outlet efficiency of the air outlet 211 is improved, thereby improving a dry ripening effect.

In some embodiments, the air return port 212 is provided above the air outlet 211. The air flow circulation assembly 400 further includes an air return cover 430, and the air return cover 430 extends forwards and upwards from a top of the fan frame 410 to the air return port 212, so as to guide the air flow blown out from the air return port 212 into the fan frame 410 under the action of the fan. Specifically, the air return port 212 is configured as a long-strip-shaped port formed at a top of the rear wall plate 210 of the drawer 200, the air return cover 430 is configured as a long-strip-shaped cover corresponding to the air return port 212, and the air return port 212 can be attached to and sleeved with an air inlet portion of the air return cover 430, so as to realize tight connection.

The air flow circulation assembly 400 in the present embodiment includes the air return cover 430 extending forwards and upwards from the top of the fan frame 410 to the air return port 212, thus defining a flow direction of the air flow blown out from the air return port 212, and ensuring that the air flow in the ripening space is blown out from the air return port 212 at an upper portion and then all enters the fan frame 410 under a blocking action of the air return cover 430. Since the fan 420 is provided in the fan frame 410, under the promoting action of the fan 420, the air flow blown out from the air return port 212 quickly enters the fan frame 410 through the air return cover 430, and an efficiency of air flow circulation is improved, thereby further improving the dry ripening effect. The air return port 212 is provided above the air outlet 211, such that the air flow in the ripening space is guaranteed to be blown out from the air return port 212 at the upper portion and then fed back into the ripening space from the air outlet 211 at a lower portion, the circulation direction of the air flow in the ripening space is limited, and flowing stability of the air flow in the ripening space is further guaranteed, thereby improving the dry ripening effect.

In some embodiments, when the drawer 200 is completely pushed into the cabinet, the air flow circulation assembly 400 is connected with the air outlet 211 and the air return port 212 of the drawer 200, the air flow circulation assembly 400 works normally, and when the drawer 200 is pulled out, the air flow circulation assembly 400 is disconnected from the air outlet 211 and the air return port 212.

In some embodiments, the fan 420 is configured as an axial flow fan. As shown in FIG. 2, the air outlet 211 is provided below the air return port 212, an air guide portion 500 is provided at the air outlet 211, and the air guide portion 500 is configured to obliquely downwards feed the air flow blown out by the axial flow fan into the ripening space. Specifically, the axial flow fan blows air from rear to front, and the air guide portion 500 is provided at the air outlet 211 and may be in a louver shape with a low front and a high rear, such that the air flow blown out by the axial flow fan is blown obliquely downwards. In the present embodiment, since the air guide portion 500 is configured to obliquely downwards feed the air flow entering the ripening space from the air outlet 211, the air flow entering the ripening space reaches each position of the ripening space after blowing over a surface of the food. Under blocking effects of an inner wall of the drawer and an inner wall of the upper cover plate, the air flow in the ripening space is blown out from the air return port 212 at the top of the ripening space, and the air flow circulation in the ripening space is completed.

In some embodiments, as shown in FIGS. 1 and 2, a first vent 412 communicated with a storage compartment of the refrigerator is formed in a side wall 411 of the fan frame 410, so as to allow air flow in the storage compartment to be sucked into the fan frame 410 from the first vent 412 and enter the ripening space from the air outlet 211 through the air guide portion 500 under the action of the fan 420. Specifically, the side walls 411 of both sides of the fan frame 410 may be provided with the first vents 412 communicated with the storage compartment of the refrigerator, so as to allow the air flow in the storage compartment to properly enter the fan frame 410 from the first vents 412 and enter the ripening space through the air outlet 211 under the action of the fan 420, so as to realize air exchange between the ripening space and the storage compartment.

Further, front regions of side wall plates on both lateral sides of the drawer 200 are provided with second vents 240 communicated with the storage compartment, so as to allow the air flow with a higher humidity in the ripening space to flow into the storage compartment from the second vents 240 under the action of the fan 420. Therefore, the air flow with a lower humidity entering the ripening space from the storage compartment flows back to the storage compartment through the second vent 240 after flowing through the whole ripening space sufficiently.

The ripening compartment 100 according to the above embodiment is provided with the first vent 412 and the second vent 240 communicated with the storage compartment, and under the action of the fan 420, the air flow in the storage compartment can enter the fan frame 410 from the first vent 412, enter the ripening space through the air outlet 211, and then be emitted to the storage compartment through the second vent 240, such that the air flow circulation between the ripening space and the storage compartment is realized, thereby reducing the humidity in the ripening compartment 100.

Further, the storage compartment may be configured as a refrigerating chamber in which the ripening compartment 100 is provided, and the first vent 412 communicates the ripening compartment 100 with the refrigerating chamber to allow certain-extent air flow exchange between the refrigerating chamber and the ripening compartment 100, thereby controlling the humidity within the ripening space. For example, the humidity in the ripening space is controlled between 50% and 90%, more preferably between 55% and 85%. In some more specific embodiments, the humidity is more preferably controlled to be 70%, thus improving the dry ripening effect.

In some embodiments, the ripening compartment 100 for a refrigerator further includes a humidity sensor for detecting the humidity within the ripening space. The humidity sensor can monitor whether the humidity in the ripening space is within a required humidity range. It should be noted that a specific position of the humidity sensor is not shown in the drawings. It should be understood by those skilled in the art that the humidity sensor may be provided on the upper cover plate 300 or the drawer 200. In some more specific embodiments, the humidity sensor is more preferably provided on the upper cover plate 300. In addition, an air flow area of the first vent 412 may be adjusted according to the humidity in the ripening space, thereby changing a rate of air exchange between the ripening space and the storage compartment. For example, a vent opening and closing device (not shown) is provided at the first vent 412, and the vent opening and closing device is configured to adjust the air flow area of the first vent 412 according to the humidity. Specifically, the vent opening and closing device adjusts the air flow area of the first vent 412 according to the humidity, so as to control the rate of air exchange between the ripening space and the storage compartment to be within a range of 5% to 30%. The vent opening and closing device is realizable by those skilled in the art and is not repeated herein. The humidity sensor is provided in the ripening compartment 100 according to the embodiment, and the air flow area of the first vent 412 can be adjusted according to the humidity, such that a problem of an overlarge humidity in the ripening space after fresh foods are placed in the ripening compartment 100 is avoided, and the humidity of the ripening space is maintained in the required humidity range, thereby achieving a better dry ripening effect.

In addition, in an optional implementation of the above embodiment, an air flow area of the second vent 240 may be set to be adjusted in synchronization with the air flow area of the first vent 412. Or, in another optional implementation of the above embodiment, the ripening compartment 100 further includes a refrigerating air supply port 600 for supplying cooling air flow at a specified temperature into the ripening space, the second vent 221 is always in a fully opened state, and the cooling air flow returns after passing through the second vent 221.

In some embodiments, the air outlet 211 is located at a middle of the rear wall plate 210 of the drawer 200, and the second vents 240 are provided at the front regions of the side wall plates on both lateral sides of the drawer 200, such that the air flow entering the fan frame 410 from the storage compartment enters the ripening space from the air outlet 211 and is then blown out at the second vents 240 on both sides of a front portion of the drawer, and therefore, the air flow entering the ripening space from the storage compartment via the fan frame 410 and the air outlet 211 can uniformly reach each position of the ripening space.

In some specific embodiments, a geometric center of the second vent 240 is positioned higher than a geometric center of the air outlet 211, which increases a speed of humidity adjustment in the ripening compartment 100. In some more specific embodiments, a lowermost side of the second vent 240 is higher than an uppermost side of the air outlet 211; in some other more specific embodiments, a lower section of the second vent 240 is overlapped with a part of an upper section of the air outlet 211. In addition, a ventilation area of the second vent 240 is set to be substantially the same as a ventilation area of the first vent 412, such that the air flow circulation is performed more stably between the storage compartment and the ripening space, and uniformity of the air flow circulation is further improved, thereby further improving the dry ripening effect.

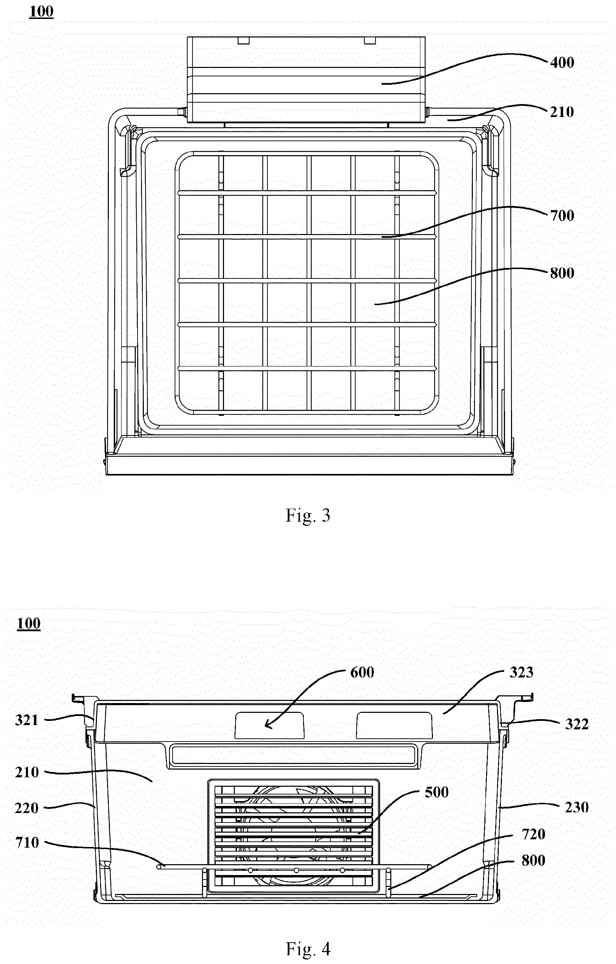

FIG. 3 is a top view of the ripening compartment for a refrigerator according to the embodiment of the present invention with the upper cover plate removed; FIG. 4 is a sectional view of the ripening compartment for a refrigerator according to the embodiment of the present invention taken along section line A-A' in FIG. 1. In some embodiments, as shown in FIGS. 3 and 4, the ripening compartment 100 according to the present invention further includes a rack 700 and a tray 800.

In the present embodiment, the rack 700 is detachably provided in the drawer 200 and configured to bear the foods, such that the air flow circulating in the ripening space flows in up-down directions and left-right directions of the foods. That is, the food is placed on the rack 700, such that the air flow circulating in the ripening space can be blown to the food in up, down, left and right directions.

The rack 700 in the present embodiment is detachable, such that on the one hand, the user can conveniently clean the rack, and on the other hand, production and assembly are easier, thus reducing a production cost of the ripening compartment 100. The rack 700 bears the food, such that the surface of the food is in direct contact with the air flow circulating in the ripening space, an evaporation speed of water on an outer layer of the food is increased, the surface of the food is rapidly dried to form a protective layer, a flavor of the food is richer and more saturated, and a better dry ripening effect is achieved.

In some more specific embodiments, the rack 700 includes a bearing surface 710 and a support 720. As shown in FIG. 3, the bearing surface 710 has a net structure, and a projected area of the bearing surface 710 on a horizontal plane is 0.8-0.99 times an area of a bottom of the drawer 200, so as to guarantee a sufficiently large space for placing the food, such that the air flow in the up-down directions and the left-right directions of the food is more sufficient, thereby further ensuring that surfaces of the food can be in direct contact with the air flow circulating in the ripening space in all directions. The projected area of the bearing surface 710 on the horizontal plane is large enough, such that an unfolded area of the food is increased, and stretching of muscle fibers in the food is facilitated, thereby allowing the aged food to have a softer mouthfeel, and further achieving a better ripening effect. Preferably, the bearing surface 710 extends horizontally, such that the air flow is generated in the up-down directions of the food, the uniformity of the air flow in the up-down directions of the food is increased, and an air drying speed of the food is increased.

As shown in FIG. 4, the support 720 is configured to support the bearing surface 710 on the bottom of the drawer 200, and a height of the support 720 is 1cm to 3cm, and in some examples, is more preferably controlled to be between 1.5cm and 2.5cm. In some more specific embodiments, the height is more preferably controlled to be 2cm. The support 720 is provided at a proper height, such that there exists a sufficient air flow space under the food borne on the rack 700, thereby increasing the air flow speed on the surface of the food and reducing occupation of a storage space in the ripening space to a certain extent. Preferably, the support 720 can be formed by vertically recessing the bearing surface 710, and the support and the bearing surface are integrally formed, such that a structure is simple, and production and manufacturing costs are reduced.

In some embodiments, the tray 800 is detachably provided below the rack 700, and is configured to collect juice dripping from the food borne on the rack 700 during a ripening process, so as to avoid that the dripping juice is accumulated and flows at the bottom of the drawer 200 and thus pollutes an internal environment of the ripening compartment 100. Moreover, the tray 800 is configured as a detachable component, such that on the one hand, the user can conveniently clean the tray, and on the other hand, production and assembly are easier, thus reducing the production cost of the ripening compartment 100.

In some embodiments, as shown in FIG. 2, the upper cover plate 300 includes a top wall 310 and a skirt 320 formed by downward folding, and the skirt 320 is configured such that a bottom surface of the skirt 320 abuts against both side walls of the drawer 200 and a top surface of the rear wall plate 210 when the drawer 200 is completely pushed into the cabinet, thus further ensuring that the upper cover plate 300 may close the top opening of the drawer 200 when the drawer 200 is completely pushed into the cabinet, and defines the independent ripening space together with the drawer 200; the drawer 200 and the upper cover plate 300 have simple structures, and are suitable for being assembled in various types of refrigerators, thereby improving universality of the ripening compartment 100.

In some more specific embodiments, as shown in FIG. 4, the skirt 320 includes a first skirt side wall 321 and a second skirt side wall 322 on both sides of the top wall 310 and a skirt rear wall 323 on a rear side of the top wall 310. Specifically, each of the first skirt side wall 321 and the second skirt side wall 322 has a wedge shape with a narrow front and a wide rear. A first side wall plate 220 and a second side wall plate 230 on the two lateral sides of the drawer 200 are correspondingly configured into high-front and low-rear structures matched with the first skirt side wall 321 and the second skirt side wall 322, such that when the drawer 200 is completely pushed into the cabinet, the bottom surface of the skirt 320 abuts against the top surface of the wall plate of the drawer 200, and the drawer 200 can be smoothly pulled in the cabinet of the refrigerator. Preferably, the first side wall plate 220 and the second side wall plate 230 of the drawer 200 are matched with the first skirt side wall 321 and the second skirt side wall 322 respectively, thus improving tightness of the ripening space. It should be noted that the front and rear are referred to herein with respect to the cabinet of the refrigerator, and the direction toward the opening of the cabinet serves as the forward direction.

In an optional implementation of the above embodiment, the ripening compartment 100 is further provided with a refrigerating air supply port 600. As shown in FIGS. 1 and 2, the skirt rear wall 323 protrudes rearwards to form the refrigerating air supply port 600, and the refrigerating air supply port 600 is configured to convey cooling air flow at a designated temperature into the ripening space, thereby controlling the temperature of the ripening space to be 0°C to 4°C. In the present implementation, a temperature sensor (not shown) for detecting the temperature in the ripening space is further provided in the ripening compartment 100; for example, the temperature sensor is provided on the upper cover plate 300, the drawer 200, or another position in the ripening space to monitor the temperature in the ripening space. For example, when the temperature sensor detects that the temperature in the ripening space is greater than or equal to a predetermined temperature, the refrigerating air supply port 600 conveys the cooling air flow at the designated temperature into the ripening space until the temperature of the ripening space is controlled to be between 0°C and 4°C.

The ripening compartment 100 according to the present embodiment is provided with the refrigerating air supply port 600 and the temperature sensor, such that the temperature in the ripening space can be monitored and controlled in real time, thereby constructing a ripening environment which can maintain a constant temperature to be suitable for dry ripening of the foods. The refrigerating air supply port 600 is formed in the upper cover plate 300, thereby preventing a refrigerating air supply form from affecting the internal structure of the drawer 200, preventing the movement of the drawer 200 from restricting the refrigerating air supply form, improving universality of the drawer 200, simplifying assembly of the ripening compartment 100, and reducing the manufacturing cost.

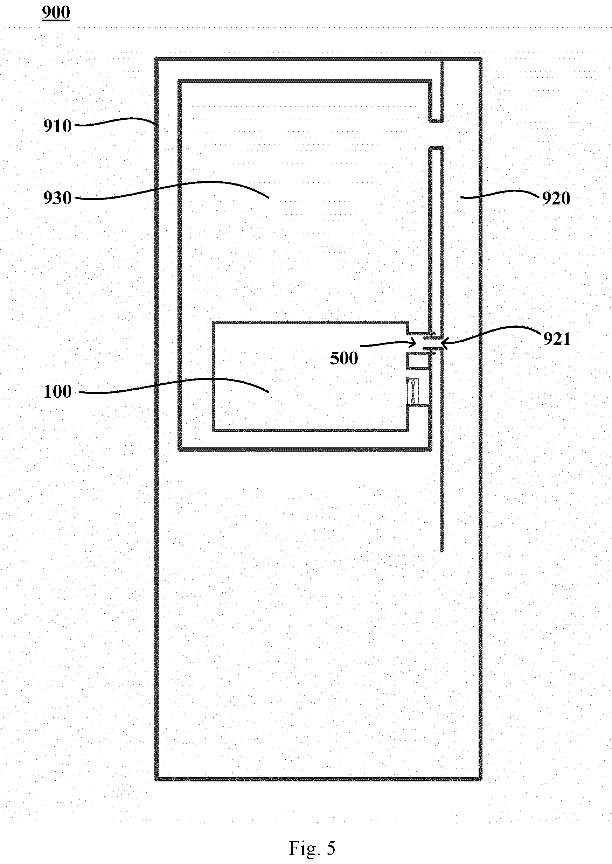

FIG. 5 is a schematic structural diagram of a refrigerator 900 according to an embodiment of the present invention. The refrigerator 900 according to the present invention may generally include a cabinet 910 and a ripening compartment 100 provided in the cabinet.

The cabinet 910 has a refrigerating air duct 920 for providing cooling air flow defined therein, and the refrigerating air duct 920 is provided with at least one air supply port 921 for delivering the cooling air flow to the outside of the refrigerating air duct 920. The ripening compartment 100 is provided with a refrigerating air supply port 600. At least a part of the at least one air supply port 921 is communicated with the refrigerating air supply port 600. In a specific application, as shown in FIGS. 2 and 3, the refrigerating air supply port 600 in the embodiment of the present invention is formed to protrude rearwards from a skirt rear wall 323 of an upper cover plate 300. As shown in FIG. 5, the refrigerating air supply port 600 is fitted over the air supply port 921, such that the refrigerating air duct 920 delivers cooling air flow at a specified temperature into the ripening compartment 100 through the refrigerating air supply port 600, and therefore, a temperature in the ripening compartment 100 is adjusted; for example, the temperature in the ripening compartment 100 is controlled to be between 0°C and 4°C.

The refrigerator 900 according to the embodiment of the present invention is provided with the ripening compartment 100 and the refrigerating air duct 920 for providing the cooling air flow at the specified temperature to the ripening compartment 100, and a ripening environment for dry ripening of foods is constructed, thus realizing self making of aged foods at home.

In some more specific embodiments, the cabinet 910 of the refrigerator 900 defines a storage compartment 930 therein, and the ripening compartment 100 is provided in the storage compartment 930. For example, clamping structures may be provided on two lateral sides of the upper cover plate 300, and compartment plate walls of the storage compartment 930 may be provided with corresponding engagement structures, such that the upper cover plate 300 can be directly fixed to the storage compartment 930 in a push-in and clamping mode.

Those skilled in the art should understand that directions or positional relationships indicated by terms "center", "upper", "lower", "front", "rear", "left", "right", "horizontal", "top", "bottom", "inner", "outer", or the like, described in the embodiments of the present invention are based on orientations or positional relationships shown in the accompanying drawings, and they are used only for describing the present invention and for description simplicity, but do not indicate or imply that an indicated device or element must have a specific orientation or be constructed and operated in a specific orientation. Therefore, it cannot be understood as a limitation on the present invention. The terms such as "first" and "second" are used herein for purposes of description and are not intended to indicate or imply relative importance or significance or to imply the number of indicated technical features. Thus, the feature defined with "first" and "second" may include at least one, i.e., one or more, of this feature explicitly or implicitly. When a feature "includes" one or some of its encompassed features, it indicates that other features are not excluded and that other features may be further included, unless specifically stated otherwise.

So far, it should be appreciated by those skilled in the art that while various exemplary embodiments of the invention have been shown and described in detail herein, many other variations or modifications which are consistent with the principles of this invention may be determined or derived directly from the disclosure of the present invention without departing from the spirit and scope of the invention. Accordingly, the scope of the invention should be understood and interpreted to cover all such other variations or modifications.

## Claims

1. A ripening compartment for a refrigerator, comprising:
a drawer provided in a cabinet of the refrigerator in a drawable mode, an upper end of the drawer being open to form a top opening for taking and placing foods, and a rear wall plate of the drawer being provided with an air outlet and an air return port;
an upper cover plate provided above the drawer, and configured to close the top opening of the drawer and define a ripening space together with the drawer when the drawer is completely pushed into the cabinet; and
an air flow circulation assembly provided on a rear side of the rear wall plate of the drawer and configured to prompt air flow to enter the ripening space through the air outlet and then be blown out from the air return port.

2. A ripening compartment for a refrigerator according to claim 1, wherein the air flow circulation assembly comprises:
a fan frame provided on a rear side of the air outlet; and
a fan provided in the fan frame and configured to prompt the air flow in the ripening space to be blown out from the air return port and then fed back to the ripening space from the air outlet.

3. The ripening compartment for a refrigerator according to claim 2,
wherein the air return port is provided above the air outlet; and
the air flow circulation assembly further comprises:
an air return cover extending forwards and upwards from a top of the fan frame to the air return port and configured to guide the air flow blown out from the air return port into the fan frame.

4. The ripening compartment for a refrigerator according to claim 3,
wherein the fan is configured as an axial flow fan;
an air guide portion is provided at the air outlet, and the air guide portion is configured to obliquely downwards feed the air flow blown out by the axial flow fan into the ripening space.

5. The ripening compartment for a refrigerator according to claim 2,
wherein a first vent communicated with a storage compartment of the refrigerator is formed in a side wall of the fan frame, so as to allow air flow in the storage compartment to be sucked into the fan frame from the first vent and enter the ripening space from the air outlet under an action of the fan;
front regions of side wall plates on both lateral sides of the drawer are provided with second vents communicated with the storage compartment, so as to allow the air flow in the ripening space to flow into the storage compartment from the second vents under the action of the fan.

6. The ripening compartment for a refrigerator according to claim 5, further comprising:
a humidity sensor for detecting a humidity within the ripening space;
wherein a vent opening and closing device is provided at the first air vent;
the vent opening and closing device is configured to adjust an air flow area of the first vent according to the humidity, thereby changing a rate of air exchange between the ripening space and the storage compartment.

7. The ripening compartment for a refrigerator according to claim 5,
wherein the air outlet is located in a middle of the rear wall plate of the drawer;
a geometric center of the second vent is positioned higher than a geometric center of the air outlet.

8. The ripening compartment for a refrigerator according to claim 1, further comprising:
a rack detachably provided in the drawer and configured to bear the foods, such that the air flow circulating in the ripening space flows in up-down directions and left-right directions of the foods; and
a tray detachably provided below the rack and configured to collect juice dripping from the foods borne on the rack in a ripening process;
wherein the rack comprises a bearing surface and a support, the bearing surface has a net structure, an area of the bearing surface is 0.8-0.99 times an area of a bottom of the drawer, the support is configured to support the bearing surface on the tray, and a height of the support is 1cm to 3cm.

9. The ripening compartment for a refrigerator according to claim 1,
wherein the upper cover plate comprises a top wall and a skirt formed by downward folding, the skirt comprises a first skirt side wall and a second skirt side wall on two sides of the top wall and a skirt rear wall on a rear side of the top wall, each of the first skirt side wall and the second skirt side wall is in a wedge shape with a narrow front and a wide rear, and the skirt rear wall protrudes backwards to form a refrigerating air supply port for conveying cooling air flow at a specified temperature into the ripening space;
a first side wall plate and a second side wall plate on the two lateral sides of the drawer are correspondingly configured into high-front and low-rear structures matched with the first skirt side wall and the second skirt side wall, such that when the drawer is completely pushed into the cabinet, a bottom surface of the skirt abuts against top surfaces of the first side wall plate, the second side wall plate and the rear wall plate.

10. A refrigerator, comprising:
a cabinet having a refrigerating air duct for providing cooling air flow defined therein; and
the ripening compartment for a refrigerator according to any one of claims 1 to 9 provided within the cabinet;
wherein the refrigerating air duct is provided with at least one air supply port for conveying the cooling air flow to the outside of the refrigerating air duct, and at least a part of the at least one air supply port is communicated with a refrigerating air supply port of the ripening compartment.
